# EUROPEAN PATENT SPECIFICATION

(11) **EP 1 553 825 B1**
(45) Date of publication and mention of the grant of the patent: **15.03.2006**
(21) Application number: 03756423.4
(22) Date of filing: 13.10.2003
(51) Int. Cl.: A01K 93/00

(54) **FISHING THROW-OFF BUOY**
SCHWIMMER
BOUEE DE LANCER POUR LA PECHE

(30) Priority: 14.10.2002 CZ 20023402
(43) Date of publication of application: 20.07.2005
(73) Proprietor: Svoboda, Jiri, 580 01 Havlickuv Brod (CZ); Pavlicek, Vit, 790 54 Cerna Voda 176 (CZ)
(72) Inventor: Svoboda, Jiri, 580 01 Havlickuv Brod (CZ); Pavlicek, Vit, 790 54 Cerna Voda 176 (CZ)
(74) Representative: Halaxova, Eva
(86) International application number: PCT/CZ2003/000055
(87) International publication number: WO 2004/034781

(56) References cited:
- US-A- 2 734 303
- US-A- 3 798 825

## Description

### Area of the invention

The invention concerns a fishing throw-off buoy used namely in sport fishing for anchoring of fish-bait in the determined fishing area.

### The actual state of the art

Rod shaped buoys are used in the sport fishing for anchoring of fish-bait in the determined fishing area recently, where such buoys hold the fish-bait buoyant and in the same time they anchor it with help of a load and so prevent its pulling down by the water stream. The rod shape of the buoy keeps the necessary distance between the anchored fish-line and the fish-line thimble of the fish-bait for preventing their mutual splicing. But the rod shaped buoys can be thrown-off only hardly with usual fishing rod. At longer buoys it is even practically impossible and such buoys should be taken to the determined location with a boat.

The goal of invention is the creation of a buoy, which will have in its initial state the minimal possible dimensions and its weight will be concentrated to smallest area around its center of gravity. In such form the buoy is fit for throwing-off to the determined place with usual fishing rod. The buoy should extend to rod shaped form after throwing-off, with fish-line thimble of the fish-bait on one side and with loaded fish-line on the other side.

### The essence of the invention

The mentioned task is fulfilled with the fishing throw-off buoy according the invention, composed from a double-float and from anchoring load of the fish-line. The parts of the float are connected with a distancing tube with fish-line going through the tube. The essence of the invention is in it, that the front part of the float with rubber locking for the fish-bait is located on the front end of distancing tube and the rear part is put on the distancing tube sliding. The front part of the tube has a greater diameter as the rear one, which is provided with an end stop for the rear part of the float. The anchoring load of the fish-line is in the same time composed from a cylinder put eccentrically and sliding on the front part of distancing tube. In its wall, in the place of reduction of diameter, there is parallel to axis cut an opening with a width greater as the outer diameter of the distancing tube rear part and less as the outer diameter of distancing tube front part. Withal the cylinder is fastened with help of a short thimble to the cap ring, which is sliding on the distancing tube between the float rear end part and the end stop. Its inner diameter is greater as the end stop outer diameter.

The cylinder can be, in its initial position, located in the chamber, created in the float front part, where a cut is created for the short thimble in the float rear end. The chamber for the cylinder can be also created in the float rear part, eventually.

On the interface between the distancing tube front and rear part preferably an elastic anti-back-up of float rear part can be located.

Essential is also the rubber lock in the float front part, where the lock is composed from a front spooling spine and from a rear spooling spine, on which the fish-line thimble of the fish-bait is spooled-on. The front spooling spine is provided with a soluble tablet safety-catch, which is composed from a folded rubber ring, the ends of which are interlaced through a pair of transit openings, composed in the float front part, and the ends are fixed with a backstop. Withal under of one semicircle of folded ring there is a soluble tablet inserted between the transit openings in the buoy initial position.

The advantage of fishing buoy according this technological solution is the small and compact size in initial state, suitable for throwing with usual fishing rod, where the buoy after falling on the water surface decomposes into the desired rod shaped form and holds the fish-line thimble of the fish-bait in a sufficient distance from the loaded fish-line.

### Overview of pictures on the drawings

The invention is detailed explained with connected drawings on the example of embodiment, where on the picture no. 1 there is an axial cross section through the float in initial state and also further cross sections are shown. On the picture no. 2 there is a view on the buoy in initial state and on the picture no. 3 there is a side view of the buoy after its falling on the water surface and after decomposition but before dissolution of tablet safety-catch. The picture no. 5 shows the construction of rubber lock and the picture no. 6 shows the cylinder of anchoring load.

### Examples of embodiment of the invention

The fishing throw-off buoy is composed from double float 1, from distancing tube 3 with going though fish-line 4 and from anchoring load 5 of fish-line 4. The front part 11 of float 1 is provided with rubber lock 2 for the fish-bait and it is located on the front part of distancing tube 3 and the rear part 12 is located on the distancing tube 3 sliding. The front part (31) of tube 3 has an outer diameter greater as the diameter of rear part 32, which is provided with an end stop 33 of rear part 12 of float 1. The anchoring load 5 of fish-line 4 is located in the chamber 6, created in the front part 11 of float 1 and it is composed from cylinder 51 located eccentrically and sliding on the front part 31 of distancing tube 3. In its wall there is in the place of diameter reduction parallel to axis a cut opening 52 provided, with a width greater as the outer diameter of rear part 32 of distancing tube 3 and less as the outer diameter of front part 31 of distancing tube 3. The cylinder 51 is with help of a short thimble 53 shifted into the cut 13 in the rear part 12 of float 1 fastened to the cap ring 54, sliding on the distancing tube 3 between the rear part 12 of float 1 and between the end stop 33. The inner diameter of cap ring 54 is greater as the outer diameter of end stop 33.

In another embodiment of the invention the cylinder 51 can be located in the chamber 6, created in the rear part 12 of float 1, eventually.

There is located an elastic back stop 7 of rear part 12 of float 1 on the interface between the front and rear parts 31, 32 of distancing tube 3.

The rubber lock 2 in the front part 11 of float 1 is composed from front spooling spine 22 and from rear spooling spine 22, on which the fish-line thimble of the fish-bait 41 is spooled on. The front spooling spine 21 is provided with a solvable tablet safety-catch 23. This is composed from folded rubber ring 24, the ends 25 of which are interlaced through a pair of transit openings 26, composed in the front part 31 of float 3, and the ends are fixed with a backstop 27. Under of one semicircle 28 of folded ring 24 there is a soluble tablet 29 inserted between the transit openings 26 in the buoy initial position.

The cap ring 54 is pulled on through the end stop 33 on the rear part 12 of float 1 before throwing-off the buoy. The cylinder 51 of load 5 is here put on through the cut opening 52 on the rear part 32 of distancing tube 3, before the rear part 12 of float 1 and then it will be shifted through the front part 31 of distancing tube 3 into the chamber 6 in the front part 11 of float 1. Here the cap ring 54 is shifted in the same time and it brings the rear part 12 of float 1 towards the front part 11. Take the solvable tablet 29 under one part of rubber ring 24, so the tablet creates the front spooling spine 21 and then around the front and rear spooling spines 21, 22 the loops of fish-line thimble 41 with the fish-bait should be wound up. Then the second part of rubber ring 24 should be shifted over the tablet front spooling spine 21, and the wound loops are fixed and the fish-bait is fastened to the buoy during providing of the thrown-off such way.

After throwing-off of buoy the rear part 12 of float 1 will sink under influence of the load 5 and the loading cylinder 51 presses the rear part 12 of float 1 towards the end stop 33. the cap ring 54 is then shifted over the stop but the rear part 12 of float 1 will be kept. The loading cylinder 51 under influence of its self-weight will shift towards the rear part 32 of distancing tube 3. With regard to the fact, that the rear part 32 has a smaller diameter as the width of cut opening 52, the loading cylinder 51 pulls off from the distancing tube 3 and the cap ring 54 together with the cylinder 51 under influence of its self-weight shifts on the fish-line 4 and anchors the buoy in the requested position. In the meantime the rear part 12 of float 1 lifts the lower part of buoy to the water level and so the whole buoy is decomposed in its final form.

The tablet 29 dissolves after contact with the water and so the safety-catch 2 and the loops of fish-line thimble 41 with the fish-bait will be free.

### Industrial applicability

The fishing throw-off buoy according the invention can be manufactured for use namely in sport fishing.

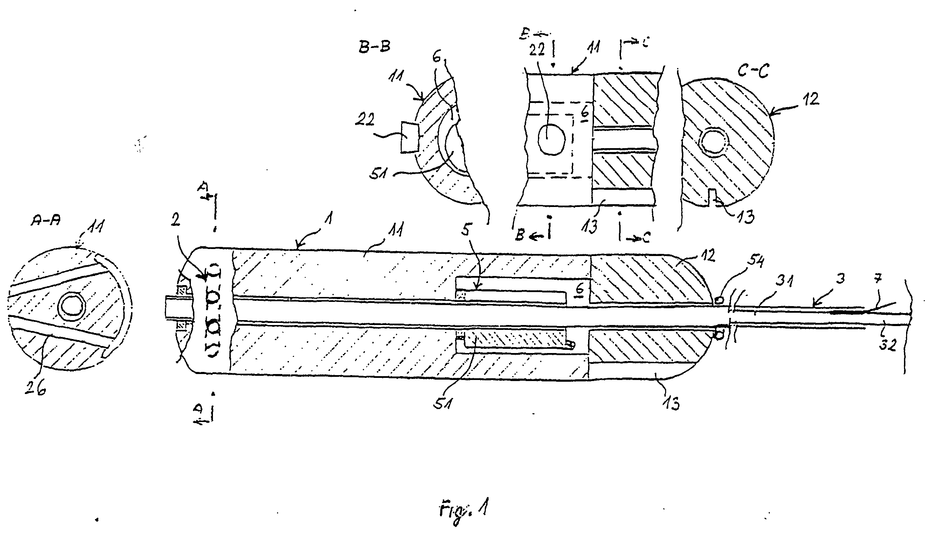

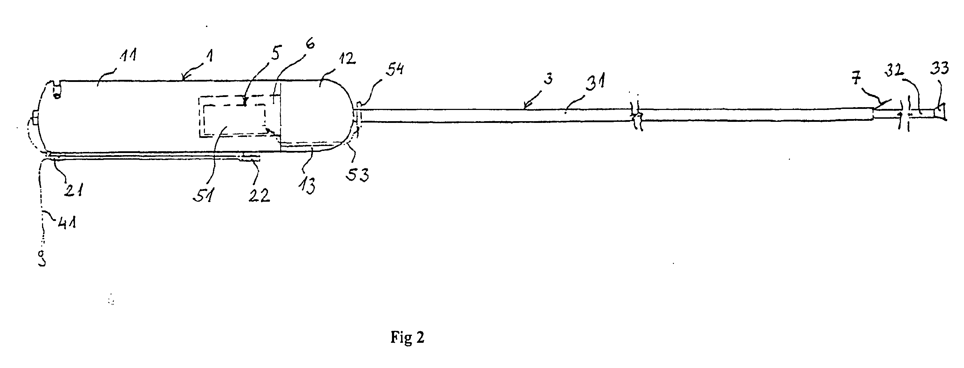

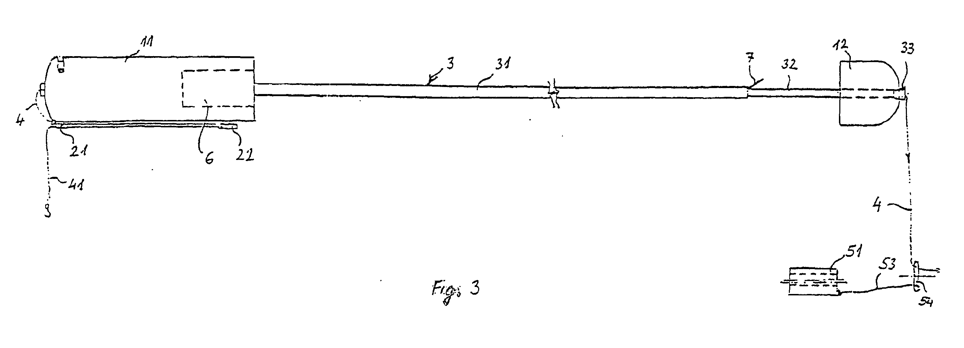

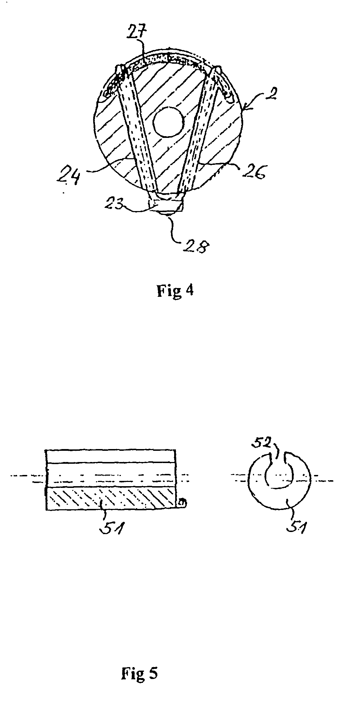

## Claims

1. The fishing throw-off buoy composed from double float and from anchoring load of the fish-line, where the parts of float are connected with a distancing tube with a going-through fish-line, ***distinguished by that*** the partly the front part (11) of float (1) with rubber lock (2) for the fish-bait is located on the front part of distancing tube (3) and the rear part (12) is located sliding on the distancing tube (3), the front part (31) of which has a greater outer diameter as the rear part (32),which is provided with an end stop (33) of rear part (12) of float (1), and partly the anchoring load (5) of fish-line (4) is composed from cylinder (51) eccentrically and sliding located on the front part (31) of distancing tube (3) and in the wall of which is in the reduced diameter place and parallel to axis a cut opening (52) is provided the width of which is greater as the diameter of rear part (32) of distancing tube (3) and less as the outer diameter of front part (31) of distancing tube (3), whereas the cylinder (51) is with help of short thimble (53) fastened to the cap ring (54) sliding on the distancing tube (3) between the rear part (12) of float (1) and between the end stop (33), the inner diameter of which is greater as the outer diameter of end stop (33).

2. The fishing throw-off buoy according to claim 1, ***distinguished by that*** the cylinder (51) is in the initial position put into the chamber (6) composed in the front part (11) of float (1), whereas in the rear part (12) of float is a cut opening (13) for the thimble (53 / or it is put in the chamber (6) composed in the rear part (12) of float (1).

3. The fishing throw-off buoy according to claim 1, ***distinguished by that*** the on the interface between the front and rear parts (31, 32) of distancing tube (3) the elastic anti-back-up of rear part (12) of float (1) is located.

4. The fishing throw-off buoy according to claim 1, ***distinguished by that*** the rubber lock (2) in the front part (11) of float (1) is composed from a front spooling spine (21) and from a rear spooling spine (22) on which the fish-line thimble (41) of the fish-bait is winded on, whereas the front spooling spine (21) is provided with solvable tablet catch-back (23).

5. The fishing throw-off buoy according to claim 1, ***distinguished by that*** the tablet catch-back (23) is composed from folded rubber ring (24), the ends (25) of which are interlaced through a pair of transit openings (26), composed in the front part (11) of float (1) and the ends are fixed with a backstop (27), whereas under of one semicircle (28) of folded ring (24) there is a soluble tablet (29) inserted between the transit openings (26) in the buoy initial position.

## Patentansprüche

1. Fischerabschlagboje zusammengestellt aus doppeltem Schwimmer und aus Ankerlast der Angelschnur, wo die Teile des Schwimmers mit einem Distanzrohr mit durchlaufender Schnur verbunden sind, ***gekennzeichnet dadurch, dass*** einerseits der Vorderteil (11) des Schwimmers (1) mit der Gummihülse (2) für den Köder auf dem vorderen Ende des Distanzrohres (3) eingelegt ist und der hintere Teil (12) gleitend auf dem Distanzrohr (3) eingelegt ist, wo der vordere Teil (31) des Distanzrohres einen größeren Diameter als der hintere Teil (32), welcher mit einem Endanschlag (33) des hinteren Teiles (129 des Schwimmers (1) ausgestattet ist, hat, und andrerseits die Ankerlast (5) der Angelschnur (4) mit einem Zylinder (51), welcher exzentrisch und gleitend auf dem vorderen Teil (31) des Distanzrohres (3) angebracht ist und im Mantel von welchem es ist, in verdünntem Teil und parallel zu der Achse, ein Verschnitt (52) von einer Breite größer als der Außendiameter des hinteren Teiles (32 des Distanzrohres (3) und kleiner als der Außendiameter des vorderen Teiles (31) des Distanzrohres (3), gemacht ist, und wo der Zylinder (51) mittels einer kürzen Strosse (53) zu dem Überwurfring (54) befestigt ist, wo der Überwurfring gleitend auf dem Distanzrohr (3) zwischen dem hinteren Teil (12) des Schwimmers (1) und dem Endanschlag (33) eingelegt ist, und wo der Innendiameter des Endanschlags größer als der Außendiameter des Endanschlags (33) ist.

2. Fischerabschlagboje gemäß des Anspruchs 1, ***gekennzeichnet dadurch, dass*** der Zylinder (51) in Ausgangslage in der Kammer (6) eingelegt ist, wo die Kammer (6) in dem vorderen Teil (11) des Schwimmers (1) gebildet ist, wobei in dem hinteren Teil (12) des Schwimmers ein Einschnitt (13) für die Strosse (53) gebildet ist / oder er ist in der Kammer (6), gebildet in dem hinteren Teil (12) des Schwimmers (1) eingelegt.

3. Fischerabschlagboje gemäß des Anspruchs *1, **gekennzeichnet dadurch, dass*** auf der Schnittstelle zwischen vorderem und hinterem Teil (31,32) des Distanzrohres (3) ein elastischer Rückschlaganschlag (7) des hinteren Teiles (12) des Schwimmers (1) eingelegt ist.

4. Fischerabschlagboje gemäß des Anspruchs 1, ***gekennzeichnet dadurch, dass*** die Gummihülse (2) in dem vorderen Teil (11) des Schwimmers (1) aus vorderem Wickelstopfen (21) und aus hinterem Wickelstopfen (22) zusammengesetzt ist, auf welchen die Strosse der Angelschnur (41) des Köders aufgewickelt ist, wobei der vordere Wickelstopfen (21) mit auflösbare Tablettensicherung (23) versehen ist.

5. Fischerbwurfboje nach Anspruch 4, **dadurch gekennzeichnet, dass** die Tablettensicherung (23) im wesentlichen die Form eines versetzten Gummirings (24) hat, dessen Enden (25) durch ein in dem Vorderteil (11) des Schwimmers ausgebildetes Paar von Durchgangsbohrungen (26) durchgezogen und mit dem Anschlag (27) fixiert sind, wobei unter einem der Halbkreise (28) des versetzten Rings (24) zwischen den Durchgangsbohrungen (26) in der Grundstellung der Boje eine lösbare Tablette (29) eingelegt ist.

## Revendications

1. Bouée de pêche à lancer portant sur la bouée double et la charge d'ancrage de fil où les parties de la bouée sont raccordées au fil traversant par le tuyau d'écartement, se *distinguant par le fait* que la partie antérieure (11) de, la bouée (1) avec la serrure en caoutchouc (2) pour l'èche est posée sur l'extrémité antérieure du tuyau d'écartement (3) et la partie postérieure (12) est posée de manière coulissante sur tuyau d'écartement (3) dont la partie antérieure (31) a le diamètre extérieure, supérieur à celui de la partie postérieure (32) qui est équipée d'une butée de fin de course (33) de la partie postérieure (12) de la bouée (1), d'un côté, et d'autre côté, par le fait que la charge d'ancrage (5) du fil (4) est composée d'un petit cylindre (51), placé de façon excentrique et coulissante sur la partie antérieure (31) du tuyau d'écartement (3), et dans son enveloppe, dans la partie moins épaisse, passe parallèlement à l'axe une coupe (52) dont la largeur est supérieure au diamètre extérieur de la partie postérieure (32) du tuyau d'écartement (3) est inférieur au diamètre extérieur de la partie antérieure (31) du tuyau d'écartement, le petit cylindre (51) est raccordé par un attache court (53) à l'anneau coulissant (54) sur le tuyau d'écartement (3) entre la partie postérieure (12) de la bouée (1) et la butée de fin de course (33) et son diamètre extérieur est supérieur au diamètre extérieur de la butée de fin de course (33)

2. Bouée de pêche à lancer selon la vindication 1 se *distinguant par le fait* que le petit cylindre (51) est posé dans la position initiale dans la chambre (6) créée dans la partie antérieure (11) de la bouée (1) tandis que dans la partie postérieure (12) de la bouée, une entaille (13) pour l'attache (53) est créée / ou il est posé dans la chambre (6) créée dans la partie postérieure (12) de la bouée (1).

3. Bouée de pêche à lancer selon la vindication 1 se *distinguant par le fait* qu'une butée de retour (7) de la partie postérieure (12) de la bouée (1) est posée à la limite des parties antérieure et postérieure (31, 32) du tuyau d'écartement (3).

4. Bouée de pêche à lancer selon la vindication 1 *se distinguant par le fait* que la serrure en caoutchouc (2) dans la partie antérieure (11) de la bouée (1) est composée d'un mandrin d'enroulement antérieur (21) et d'un mandrin d'enroulement postérieur (22) sur lequel un fil (41) de l'èche est enroulé tandis que un mandrin d'enroulement antérieur (21) est équipé d'une protection de tablette soluble (23).

5. Bouée de pêche à lancer selon la vindication *4 se **distinguant par le fait*** que la protection de tablette (23) est composée d'une bague en caoutchouc pliée (24) dont les extrémités (25) passent par un couple d'ouvertures de passage (26) créées dans la partie antérieure (11) de la bouée (1) et fixées par une butée (27) et une tablette soluble (29) est posée entre les ouvertures de passage (26) dans la position initiale de la bouée au-dessous de l'un des demi-cercles (28) de la bague pliée (24).
